(19) Europäisches Patentamt
European Patent Office
Office européen des brevets

(11) Veröffentlichungsnummer: **0 264 794 B1**

(12) # EUROPÄISCHE PATENTSCHRIFT

(45) Veröffentlichungstag der Patentschrift: **18.04.90**

(51) Int. Cl.⁴: **B01J 13/02**

(21) Anmeldenummer: **87114972.0**

(22) Anmeldetag: **13.10.87**

(54) **Mikrokapseln mit Wänden aus Polyurethan.**

(30) Priorität: **22.10.86 DE 3635822**

(43) Veröffentlichungstag der Anmeldung:
**27.04.88 Patentblatt 88/17**

(45) Bekanntmachung des Hinweises auf die Patenterteilung:
**18.04.90 Patentblatt 90/16**

(84) Benannte Vertragsstaaten:
**AT BE CH DE FR GB IT LI NL SE**

(56) Entgegenhaltungen:
**EP-A- 0 214 936**
**DE-A- 2 434 406**
**US-A- 3 432 327**

(73) Patentinhaber: **BAYER AG,**
**D-5090 Leverkusen 1 Bayerwerk(DE)**

(72) Erfinder: **Jabs, Gert, Dr., Wingensiefer Kamp 25,**
**D-5068 Odenthal(DE)**
Erfinder: **Richartz, Adolf, Dr., No. 6, German School Lane, Beachland Apapa(NG)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Verfahren zur Herstellung von Mikrokapseln durch Grenzflächenpolyaddition zwischen Polysocyanaten und Polyamine sind bekannt und beispielsweise beschrieben in den Deutschen Offenlegungsschriften 2 109 335; 2 251 381; 2 242 910; 2 120 921; 2 311 712 und 2 523 586.

In der dispersen Phase lassen sich derart sowohl Isocyanate verwenden, die löslich sind als auch solche, die mit der organischen Flüssigkeit eine Emulsion ergeben.

In der dispersen Phase werden nach dem Stand der Technik sowohl aliphatische bzw. modifizierte aliphatische Polyisocyanate als auch Kombinationen von aliphatischen mit aromatischen Polyisocyanaten eingesetzt. Durch Reaktion mit den in der wäßrigen Phase eingesetzten Aminen ergeben sich dann nach dem Grenzflächenpolyadditionsverfahren Mikrokapseln mit Polyharnstoff als Wandmaterial. Zur Forcierung bzw. Steuerung der Wandbildung werden gegebenenfalls an sich bekannte Aktivatoren/Katalysatoren wie tertiäre Amine zugesetzt.

Die nach dem bisherigen Stand der Technik aus Isocyanaten und Aminen durch Grenzflächenpolyaddition hergestellten Mikrokapseln enthalten in der Kapseldispersion geringe Mengen nicht umgesetzter Amine, da die totale Umsetzung durch die sich aufbauende Kapselwand immer stärker behindert wird, bis schließlich eine Reaktion nicht mehr zustande kommt. Verwendet man die Mikrokapseln zur Herstellung von kohlefreien Durchschreibepapieren, so kann bei der Erzeugung von Durchschriften die Intensität leiden, da Amine und Aminverbindungen den sauren Farbentwickler neutralisieren.

Andererseits müssen die Mikrokapseln für diesen Anwendungszweck eine ausreichende Dichtigkeit aufweisen.

Eine befriedigende Wandbildung durch Reaktion von Polyisocyanaten mit OH-terminierten Verbindungen ist bislang nicht möglich. Die so erzeugten Kapseln sind undicht und instabil; auch durch Zusatz von Aktivatoren lassen sich derart keine Kapseln herstellen, die dem Stand der Technik entsprechen; d.h. die Wandbildung aus Polyurethan ist bislang nicht möglich.

Aufgabe der Erfindung ist es, verbesserte Mikrokapseln bereitzustellen.

Gegenstand der Erfindung sind Mikrokapseln mit wenigstens einer Kapselwand, die ein Polyurethan enthält. Erfindungsgemäß besteht die Kapselwand zu wenigstens 50 % aus einem Polyurethan, welches erhalten worden ist durch Umsetzung von in organischer Phase gelöstem Di- und/oder Polyisocyanat und einem Polyetherpolyol, welches OH-Gruppen und wenigstens eine Aminogruppe enthält. Vorzugsweise handelt es sich bei den Aminogruppen um Gruppen mit tertiärem Stickstoff.

In einer anderen bevorzugten Ausführungsform beträgt das Molekulargewicht des Polyetherpolyols 100 bis 3000, vorzugsweise 300 bis 1500.

In einer weiteren bevorzugten Ausführungsform ist das Polyetherpolyol das Umsetzungsprodukt eines Epoxides mit Ammoniak und/oder einem Diamin und/oder einem Alkanolamin, insbesondere Ethyanolamin, wobei Ethylenoxid und Propylenoxid besonders bevorzugte Epoxide sind. Geeignete Polyetherpolyole sind z.B. im Kunststoff-Handbuch, Band 7, Polyurethane, Hauser Verlag [1983], S. 44, beschrieben.

Bevorzugte Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75-136, beschrieben werden, beispielsweise Ethylen-Diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat, sowie beliebige Gemische dieser Isomeren, 1-Isocyanato-3,3,5-trimethyl-5-isocyanatomethyl-cyclohexan (DAS 1 202 785, US-Patentschrift 3 401 190), 2,4- und 2,6-Hexahydrotoluylendiisocyanat, sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3-und 1,4-Phenylendiisocyanat, 2,4- und 2,6-Toluylendiisocyanat, sowie beliebige Gemische dieser Isomeren, Diphenylmethan-2,4'- und/oder -4,4'-diisocyanat, Naphthylen-1,5-diisocyanat, Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in den britischen Patentschriften 874 430 und 848 671 beschrieben werden, m- und p-Isocyanatophenyl-sulfonyl-isocyanate gemäß der US-Patenschrift 3 454 606, perchlorierte Arylpolyisocyanate, wie sie z.B. in der deutschen Auslegeschrift 1 157 601 (US-Patentschrift 3 277 138) beschrieben werden, Carbodiimidgruppen aufweisende Polyisocyanate, wie sie in der deutschen Patentschrift 1 092 007 (US-Patentschrift 3 152 162) beschrieben werden, Diisocyanate, wie sie in der US-Patentschrift 3 492 330 beschrieben werden, Allophanatgruppen aufweisende Polyisocyanate, wie sie z.B. in der britischen Patentschrift 761 626 und der veröffentlichten holländischen Patentanmeldung 7 102 524 beschrieben werden, Isocyanuratgruppen aufweisende Polyisocyanate, wie sie z.B. in der US-Patentschrift 3 001 973, in den deutschen Patentschriften 1 022 789, 1 222 067 und 1 027 394, sowie in den deutschen Offenlegungsschriften 1 929 034 und 2 004 048 beschrieben werden, Urethangruppen aufweisende Polyisocyanate, wie sie z.B. in der belgischen Patentschrift 752 261 oder in der US-Patentschrift 3 394 164 beschrieben werden, acylierte Harnstoffengruppen aufweisende Polyisocyanate gemäß der deutschen Patentschrift 1 230 778, Biuretgruppen aufweisende Polyisocyanate, wie sie z.B. in der deutschen Patentschrift 1 101 394 (US-Patentschrift 3 124 605 und 3 201 372) sowie in der britischen Patentschrift 889 050 beschrieben werden, durch Telomerisationsreaktionen hergestellte Polyisocyanate, wie sie z.B. in der US-Patentschrift 3 654 106, beschrieben werden, Ethergruppen aufweisende Polyisocyanate, wie sie z.B. in den britischen Patentschriften 965 474 und 1 072 956, in der US-Patentschrift 3 567 763 und in der deutschen Patentschrift 1 231 688 genannt werden, Umsetzungsprodukte der oben genannten Isocyanate mit Acetalen gemäß der deutschen Patentschrift 1 072 385, polymere Fettsäurereste enthaltende Polyisocyanate gemäß der US-Patentschrift 3 455 883.

Es ist auch möglich, die bei der technischen Isocyanatherherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Geeignete modifizierte, aliphatische Isocyanate sind solche auf Basis von Hexamethylen-1,6-diisocyanat, m-Xylylendiisocyanat, 4,4'-Diisocyanat-dicyclohexylmethan bzw. Isophorondiisocyanat, die pro Molekül mindestens zwei funktionelle Isocyanatgruppen aufweisen.

Ferner geeignet sind Polyisocyanate auf Basis von Derivaten des Hexamethylen-1,6-diisocyanats mit Biuretstruktur gemäß DE-AS 1 101 394, DE-AS 1 543 178, DE-OS 1 568 017, DE-OS 1 931 055.

Außerdem einsetzbar sind Polyisocyanato-polyuretonimine, wie sie durch Carbodiimidisierung von Biuretgruppen enthaltendem Hexamethylen-1,6-diisocyanat mit phosphororganischen Katalysatoren entstehen, durch weitere Umsetzung primär gebildeter Carbodiimidgruppen mit Isocyanatgruppen zu Uretonimingruppen.

Es können auch Isocyanurat-modifizierte Polyisocyanate mit mehr als zwei endständigen Isocyanatgruppen verwendet werden. Speziell ist in der DE-OS 2 839 133 die Herstellung Isocyanurat-modifizierter Polyisocyanate auf Basis von Hexamethylendiisocyanat beschrieben. Die übrigen können analog erhalten werden.

Geeignet sind ferner die Isocyanate der Formel (I)

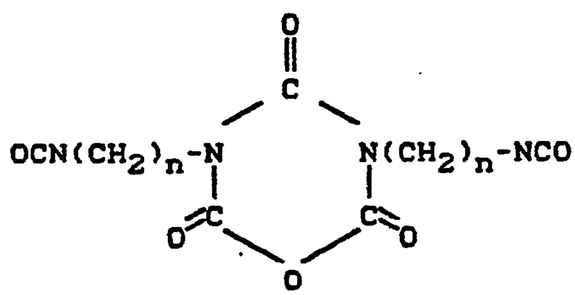

(I)

n = 3-6

Es können auch Gemische aus den genannten modifizierten aliphatischen und den genannten aromatischen Isocyanaten insbesondere Diphenylmethandiisocyanaten, die gegebenenfalls modifiziert sein können, verwendet werden.

Bevorzugte Isocyanate sind biuretisches Hexamethylendiisocyanat in Abmischung mit 4,4'-Diphenylmethanisocyanat, gegebenenfalls mit 2,4-Anteil, trimerisiertes Hexamethylendiisocyanat in Abmischung mit 4,4'-Diphenylmethandiisocyanat, gegebenenfalls mit 2,4-Anteil und/oder Isocyanate der Formel (I) (Oxadiazintrion des HDI).

Weitere Diisocyanate sind die in den deutschen Patentanmeldungen 3 105 776 und 3 521 126 angegebenen Alkylbenzoldiisocyanate und Alkoxybenzoldiisocyanate, die auch in Form ihrer Biuret-isocyanaturetdion-Oligomeren oder als Prepolymere verwendet werden können.

Die erfindungsgemäß zu verwendenden Polyetherpolyole können kombiniert werden mit an sich bekannten Vernetzern für das Grenzflächenpolyadditionsverfahren.

Bevorzugte, zur Grenzflächenreaktion mit den Isocyanaten geeignete, auch als "Vernetzer" fungierende Amine sind aliphatische, primäre oder sekundäre Di- und Polyamine, z.B.: Ethylendiamin-(1,2), Bis(3-aminopropyl)amin, Hydrazinethanol-(2), Bis(2-methylaminoethyl)methylamin, 1,4-Diaminocyclohexan, 3-Amino-1-methyl-aminopropan, N-Hydroxy-ethyl-ethylendiamin, N-Methyl-bis(3-aminopropyl)amin, 1,4-Diamino-n-butan, 1,6-Diamino-n-hexan, Ethylen-(1,2)-diamin-N-ethyl-sulfonsäure (als Alkalisalz), 1-Aminoethylendiamin-(1,2), Bis(N,N'-aminoethyl)ethylendiamin-(1,2).

Hydrazin und seine Salze werden im vorliegenden Zusammenhang ebenfalls wie Amin angesprochen. Bevorzugte Amine (Vernetzer) im Sinne der Erfindung sind Diethylentriamin, Hexamethylendiamin, Hydrazinhydrat, 4,4'-Diphenylmethandiamin, Triethanolamin und/oder Mischungen daraus.

Die erfindungsgemäßen Mikrokapseln sind besonders geeignet für die Einkapselung von Farbstoffvorläufern für Reaktionsdurchschreibematerialien. Die Kapseln können aber auch andere Verbindungen, wie Lösungsmittelwirkstoffe usw. enthalten.

Beispiele für Farbstoffvorläufer sind Triphenylmethanverbindungen, Diphenylmethanverbindungen, Xanthenverbindungen, Thiazinverbindungen, Spiropyranverbindungen.

Insbesondere sind geeignet: Triphenylmethanverbindungen: 3,3-Bis-(p-dimethylaminophenyl)-6-dimethylaminophthalid ("Kristallviolettlacton", nachstehend als "C.V.L." bezeichnet) und 3,3-Bis-(p-dime-

thylaminophenyl)-phthalid ("Malachitgrünlacton"), Diphenylmethanverbindungen: 4,4'-Bis-dimethylaminobenzhydrylbenzylether, N-Halogenphenylleucauramin, N-β-Naphthylleucauramin, N-2,4,5-Trichlorphenylleucauramin, N-2,4-Dichlorphenylleucauramin; Xanthenverbindungen: Rhodamin-β-anilinolactam, Rhodamin-β-(p-nitroanilin)-lactam, Rhodamin-β-(p-chloranilin)-lactam, 7-Dimethyl-amin-2-methoxy-fluoran, 7-Diethylamin-3-methoxyfluoran, 7-Diethylamin-3-methylfluoran, 7-Diethylamin-3-chlorfluoran, 7-Diethylamin-3-chlor-2-methylfluoran, 7-Diethylamin-2,4-dimethylfluoran, 7-Diethylamin-2,3-dimethylfluoran, 7-Diethylamin-(3-acetylmethylamin)-fluoran, 7-Diethyl-amin-3-methylfluoran, 3,7-Diethylkaminfluoran, 7-Diethylamino-3-(dibenzylamin)-fluoran, 7-Dithylamin-3-(methylbenzylamin)-fluoran, 7-Diethylamin-3-(chlorethylmethylamino)-fluoran, 7-Diethylamin-3-(dichlorethylamin)-fluoran, 7-Diethylamin-3-(diethylamin)-fluoran; Thiazinverbindungen: N-Benzoylleucomethylenblau, o-Chlorbenzoylleucomethylenblau, p-Nitrobenzoylleucomethylenblau; Spiroverbindungen: 3-Methyl-2,2'-spiro-bis-(benzo(f)-chromen).

Lösungsmittel, die diese Farbstoffvorläufer lösen, sind z.B. chloriertes Diphenyl, chloriertes Paraffin, Baumwollsamenöl, Erdnußöl, Siliconöl, Trikresylphosphat, Monochlorbenzol, ferner teilhydrierte Terphenyle, alkylierte Diphenyle, alkylierte Naphthaline, Arylether, Arylalkylether, höher alkyliertes Benzol und andere.

Häufig werden den Lösungsmitteln Verdünnungsmittel zugesetzt, wie beispielsweise Kerosin, n-Paraffine, Isoparaffine.

Zur Herstellung der Mikrokapseln nach dem Polyadditionsverfahren wird das Isocyanat in den genannten hydrophoben Kernmaterialien gelöst und diese organische Phase in der kontinuierlichen wäßrigen Phase, die Schutzkolloid und gegebenenfalls Emulgatoren enthalten kann, emulgiert. Zur Emulsion gibt man eine wäßrige Polyaminlösung in stöchiometrischer Menge zum Polyisocyanat in der organischen Phase.

Zur Emulgierung und Stabilisierung der gebildeten Emulsion werden der wäßrigen Phase Schutzkolloide und Emulgierhilfsmittel zugesetzt. Beispiele für solche als Schutzkolloide wirkende Produkte sind Carboxymethylcellulose, Gelatine und Polyvinylalkohol. Beispiele für Emulgatoren sind oxethyliertes 3-Benzylhydroxybiphenyl, Umsetzungsprodukte von Nonylphenol mit unterschiedlichen Mengen Ethylenoxid und Sorbitanfettsäureester.

Die Mikrokapseln können kontinuierlich oder diskontinuierlich hergestellt werden. Man verwendet im allgemeinen Dispergiergeräte, die ein Schergefälle erzeugen. Beispiele hierfür sind Blatt-, Korb-, Schnellrührer, Kolloidmühlen, Homogenisatoren, Ultraschalldispergatoren, Düsen, Stahldüsen, Supraton®-Maschinen. Die Stärke der Turbulenz beim Vermischen ist in erster Linie bestimmend für den Durchmesser der erhaltenen Mikrokapseln. Kapseln in der Größe von 1 bis 2000 µm können hergestellt werden. Bevorzugt sind Kapseln mit Durchmessern von 2 bis 20 µm.

Die hochkonzentrierten Suspensionen können nach einer kurzen weiteren Nachbehandlung direkt für den jeweils vorgesehenen Einsatzzweck verwendet werden.

Die Suspensionen lassen sich beispielsweise durch Sprühtrocknung in agglomeratfreie Kapselpulver überführen. Die Sprühtrocknung ist bei derartig konzentrierten Suspensionen besonders rationell, da die zu verdampfende Menge Wasser vergleichsweise gering ist.

Die Farbstoffvorläufer enthaltenden Mikrokapseldispersionen können beispielsweise zur Herstellung kohlefreier Durchschreibepapiere verwendet werden.

Hierzu werden die erfindungsgemäßen Suspensionen mit Bindemitteln und Abstandshaltern versehen und auf eine Papierträgerbahn aufgestrichen. Die Formulierung derartiger Streichfarben ist längst bekannter Stand der Technik.

Vorteilhafterweise können jedoch beim erfindungsgemäßen Verfahren hochkonzentrierte Streichmassen verwendet werden und dabei die Trocknung der Beschichtungsmassen rationeller gestaltet werden.

Es ist auch möglich, die erfindungsgemäßen Suspensionen aufgrund des hohen Kapselgehaltes direkt, ohne aufwendige Aufkonzentrierung, zur Herstellung wäßriger Flexodruckpasten zu verwenden. Die Herstellung kapselhaltiger Flexodruckpasten und die Herstellung von vollflächig oder partiell beschichteter Durchschreibepapiere ist bereits bekannt. Der Vorteil beim Einsatz der erfindungsgemäßen Suspensionen besteht darin, daß bislang notwendige Aufkonzentrierungen entfallen können.

Als Reaktionspartner für die Farbstoffvorläufer in den Mikrokapseln können an sich bekannte Farbentwickler eingesetzt werden, wie beispielsweise saure Tone, Montmorillonit, Bentonite und Smectite oder synthetische Phenolharze.

Die Geberkomponente ist im allgmeinen bei Durchschreibesätzen die Rückseite des Oberblattes. Die Vorderseite des nächsten Blattes ist mit der zweiten Farbgeberkomponente beschichtet. Man bezeichnet diese Schicht als Nehmerkomponente. Bei Durchschreibesätzen ist die Nehmerkomponente die Oberseite des zweiten Papierblattes. Bei Mehrfachdurchschriebesätzen müssen die folgenden Geberblätter auf der Gegenseite eine Nehmerbeschichtung tragen. Die Herstellung solcher Nehmerschichten ist bekannt und ebenfalls in den deutschen Offenlegungsschriften 1 934 457 und 1 955 542 beschrieben.

Weitere Einzelheiten zur Durchführung des erfindungsgemäßen Verfahrens sind den nachfolgenden Beispielen zu entnehmen.

Beispiel 1

In 166,2 g Chlorparaffin wurden 17,5 g eines schwarzen Fluoranfarbstoffes (Pergascript Schwarz IBR der Fa. Ciba-Geigy AG) gelöst und mit weiteren 166,25 g Dodecylbenzol verschnitten.

Anschließend wurden 32,6 g eines Gemisches aus 8 Teilen eines Biuret-modifizierten Hexamethylendi-isocyanates und 2 Teilen 4,4'-Diphenylmethandiisocyanat mit 60 % 2,4 Anteil in der Farbgeberlösung gelöst.

Diese organische Phase wurde mit 501 g einer 0,5 %igen wäßrigen Lösung eines teilverseiften Polyvinylacetats vermischt und mit einem handelsüblichen Emulgiergerät eine Öl/Wasseremulsion von 7,5 µm mittlerer Tröpfchengröße hergestellt.

Anschließend erfolgte die Zugabe von 116 g einer wäßrigen 15 %igen Ethylendiamin-gestarteten Propylenoxid Polyether-Lösung mit der OH-Zahl 630. Die so gebildete Kapseldispersion wurde zwei Stunden bei einer Temperatur von 58°C gehalten. Es wurde eine 40 %ige Mikrokapseldispersion erhalten.

Beispiel 2

In 171 g Chlorparaffin wurden 18 g eines schwarzen Fluoranfarbgebers (Pergascript Schwarz IBR der Fa. Ciba-Geigy AG) gelöst und mit weiteren 171 g Dodecylbenzol verschnitten.

Anschließend wurden 26 g Isocyanatgemisch gemäß Beispiel 1 in der Farbgeberlösung gelöst.

Diese organische Phase wurde mit 321 g einer 0,5 %igen wäßrigen Lösung eines teilverseiften Polyvinylacetates vermischt und mit einem handelsüblichen Emulgiergerät eine Öl/Wasseremulsion von 7 µm mittlerer Tröpfchengröße hergestellt.

Anschließend erfolgte die Zugabe von 92,7 g 15 %iger wäßriger Polyetherlösung (gemäß Beispiel 1). Die so gebildete Kapseldispersion wurde zwei Stunden bei einer Temperatur von 58°C gehalten. Es wurde eine 40 %ige Mikrokapseldispersion erhalten.

Eine Probe des hergestellten Papieres wurde mit der beschichteten Seite auf eine Nehmerpapier gelegt und weitere 3 Rohpapiere aufgelegt. Mit einer elektrischen Schreibmaschine wurde mit konstanter Anschlagstärke eine Fläche von ca. 4 x 4 cm so eng wie möglich mit den Buchstaben "w" beschriftet. Die auf dem Nehmerpapier sichtbare Durchschrift wurde auf ihre Schriftintensität untersucht, indem man den Verlust der Remission gegenüber nicht beschriftetem Papier mit einem Remissionsmeßgerät (Elrephomat der Fa. Zeiss) ermittelt. Die Remissionswerte werden berechnet nach folgender Formel:

$$\frac{I_o - I}{I_o} \times 100 = \text{Remissionswert in \%}$$

worin

$I_o$ = Remissionswert des unbeschichteten Papiers

I = gemessener Wert der Probe

Die Dichtigkeit (Impermeabilität) der Kapselwand wurde wie folgt festgestellt

Zur Messung der Dichtigkeit wurden 5,0 Teile der gebildeten Kapseldispersion mit 10 Teilen Wasser verdünnt und anschließend mit 10 Teilen Kieselsol (Kieselsol F 300 der Fa. Bayer AG) vermischt. Die Mischung wurde mit einem 40 µm Drahtrakel auf ein Rohpapier in einer Menge von etwa 5,5 g/m² aufgetragen, getrocknet und anschließend 2 Stunden bei 70°C und 75 % rel. Feuchte getempert. Eventuelle Undichtigkeiten zeigen sich in einer starken Verblauung der Papiere, da nicht eingekapselte Farbgeberlösung mit Kieselsäure zum Farbstoff reagiert.

Zur Messung der Verschmutzungsneigung (Friktionstest) wird wie folgt vorgegangen:

Es wird ein 4,15 kg schwerer Metallzylinder mit einer runden Auflagefläche (Ø 49 mm - 0,225 kg/cm²) benötigt. Dieser Zylinder wird auf folgend von unter nach oben angeordnetem Papierpaket gestellt. 5 Rohpapiere/CB- bzw. CFB-probe (CB-Seite nach oben) CF-Papier (CF-Papier nach unten).

Das CF-Papier wird über die fixierten restlichen Papiere mitsamt dem Gewicht in gleichmäßiger Bewegung ca. 15 cm lang gezogen. Dabei entsteht auf dem CF-Papier eine kreisförmige Verfärbung (Abrieb), die optisch und meßtechnisch ausgewertet werden kann und Aufschluß über Friktionsstabilitäten der Papiere gibt.

Der Remissionswert sollte <5,0 % sein und darf 10,0 % nicht überschreiten.

Dichtigkeit und Verschmutzungsneigung werden ebenfalls zahlenmäßig als Remissionswert festgehalten und mit dem Elrephomat wie bei der Durchschreibeleistung beschrieben ermittelt.

| | Intensität | Friktion | Dichtigkeit | Wandanteil |
|---|---|---|---|---|
| Beispiel 1 | 45,3% | 4,5% | 2,1% | 12,5% |
| Beispiel 2 | 52,7% | 8.9% | 4,7% | 10% |

Die Durchschreibeleistung (Intensität) sowie die Verschmutzungsneigung (Friktion) und die Dichtigkeiten liegen jeweils in der gleichen Größenordnung; die letzte Spalte zeigt, daß das neue erfindungsgemäße Kapselmaterial einen überraschend geringen Wandanteil zuläßt.

**Patentansprüche**

1. Mikrokapseln mit wenigstens einer Kapselwand, die ein Polyurethan enthält, dadurch gekennzeichnet, daß die Kapselwand zu mindestens 50% aus Polyurethan besteht, welches erhalten worden ist durch Umsetzung von in organischer Phase gelöstem Di- und/oder Polyisocyanat mit einem Polyetherpolyol, welches wenigstens eine Aminogruppe enthält.
2. Mikrokapseln nach Anspruch 1, dadurch gekennzeichnet, daß das Molekulargewicht des Polyetherpolyols zwischen 100 und 3000 liegt.
3. Mikrokapseln nach wenigstens einem der vorhergehenden Ansprüche, dadurch gekennzeichnet, daß das Polyetherpolyol erhalten worden ist aus der Umsetzung eines Epoxides mit Ammoniak und/oder einem Diamin und/oder einem Alkanolamin.
4. Mikrokapseln nach Anspruch 3, dadurch gekennzeichnet, daß das Epoxid Ethylenoxid oder Propylenoxid ist.
5. Mikrokapseln nach wenigstens einem der vorhergehenden Ansprüche, dadurch gekennzeichnet, daß das Di- und/oder Polyisocyanat ein aliphatisches Isocyanat ist.
6. Druckempfindliches Reaktionsdurchschreibepapier mit Mikrokapseln gemäß wenigstens einem der vorhergehenden Ansprüche.

**Claims**

1. Microcapsules having at least one capsule wall which contains a polyurethane, characterized in that at least 50% of the capsule wall comprises polyurethane which can be obtained by reacting a diisocyanate and/or polyisocyanate dissolved in an organic phase with a polyether polyol which contains at least one amino group.
2. Microcapsules according to Claim 1, characterized in that the molecular weight of the polyether polyol is between 100 and 3,000.
3. Microcapsules according to at least one of the preceding claims, characterized in that the polyether polyol has been obtained from the reaction of an epoxide with ammonia and/or a diamine and/or an alkanolamine.
4. Microcapsules according to Claim 3, characterized in that the epoxide is ethylene oxide or propylene oxide.
5. Microcapsules according to at least one of the preceding claims, characterized in that the diisocyanate and/or polyisocyanate is an aliphatic isocyanate.
6. Pressure-sensitive reaction copy paper having microcapsules according to at least one of the preceding claims.

**Revendications**

1. Microcapsules présentant au moins une paroi de capsule qui contient un polyuréthanne, caractérisées en ce que la paroi est constituée à 50% au moins de polyuréthanne qui a été obtenu par réaction de diisocyanate et/ou de polyisocyanate dissous en phase organique, avec un polyetherpolyol qui contient au moins un groupe amino.
2. Microcapsules suivant la revendication 1, caractérisées en ce que le poids moléculaire du polyétherpolyol se situe entre 100 et 3000.
3. Microcapsules suivant au moins l'une des revendications précédentes, caractérisées en ce que le polyétherpolyol a été obtenu par réaction d'un époxyde avec l'ammoniac et/ou une diamine et/ou une alcanolamine.
4. Microcapsules suivant la revendication 3, caractérisées en ce que l'époxyde est l'oxyde d'éthylène ou l'oxyde de propylène.
5. Microcapsules suivant l'une des revendications précédentes, caractérisées en ce que le diisocyanate et/ou le polyisocyanate est un isocyanate aliphatique.
6. Papier de copiage à réaction sensible à la pression, comportant des microcapsules suivant au moins l'une des revendications précédentes.